# EUROPÄISCHE PATENTSCHRIFT

(11) **EP 1 090 830 B1**
(45) Veröffentlichungstag und Bekanntmachung des Hinweises auf die Patenterteilung: **08.09.2004**
(21) Anmeldenummer: 99810905.2
(22) Anmeldetag: 05.10.1999
(51) Int. Cl.: B62D 27/06, B62D 33/04

(54) **Baugruppenverbindung**
Connection for built-up structures
Connection de structures assemblées

(43) Veröffentlichungstag der Anmeldung: 11.04.2001
(73) Patentinhaber: Alcan Technology & Management AG, 8212 Neuhausen am Rheinfall (CH)
(72) Erfinder: Waldeck, Klaus-Dieter, 8954 Geroldswil (CH); Streiff, Samuel, 5210 Windisch (CH)

(56) Entgegenhaltungen:
- EP-A- 0 331 865
- EP-A- 0 755 847
- DE-A- 3 740 401

## Beschreibung

Linienförmige Kaltverbindung nach dem Oberbegriff des Anspruchs 1.

Fahrzeugaufbauten bekannter Bauart enthalten üblicherweise eine mit ihrer Aussenkontur bündig verlaufende Gerippestruktur, auf welche unter anderem Verkleidungselemente, die Verglasung der Fensterbereiche und dergl. befestigt sind. Die Gerippestruktur enthält üblicherweise eine Mehrzahl verschiedenster Profile die z.B. über Warm- oder Kaltverbindungen zu Modulen gefügt sind.

Eine Gerippestruktur enthält beispielsweise in Fahrzeuglängsrichtung verlaufende Bauteile, insbesondere Längsprofile, wie Boden- oder Dachgurten, welche über linienförmige Kaltverbindungen mit weiteren Bauteilen, insbesondere mit Längsprofilen, wie Wand- oder Dachanschlussprofilen verbunden sind.

In Fahrzeuglängsrichtung verlaufende Längsprofile verbinden beispielsweise Wandelemente mit Boden- oder Deckenelementen.

In der Herstellung von Karosserien sind die relativ grossen Fertigungstoleranzen der einzelnen Bauteile ein bedeutendes Problem. Die bekannten linienförmigen Kaltverbindungen erlauben zudem nur geringe Toleranzen der Bauteile. Dies bedeutet, dass die einzelnen Bauteile einer Gerippestruktur beispielsweise in entsprechend hoher Präzision gefertigt sein müssen, oder dass die zu fügenden Bauteile mittels aufwendigen Nachbearbeitungsschritten einander angepasst werden müssen.

Es ist beispielsweise eine linienförmige Kaltverbindung bekannt, bei welcher ein erstes und zweites Längsprofil mit parallel zueinander liegenden Profillängsachsen einander über Fügeflächen anliegen und mittels die Fügeflächen durchsetzenden Schraubverbindungen gegenseitig verbunden sind. Diese Lösung weisen den Nachteil auf, dass die Teile nicht gerichtet werden können, um Toleranzen auszugleichen.

Die EP 0 755 847 beschreibt eine Baugruppenverbindung mit mindestens zwei entlang einer gemeinsamen Berührungsfläche miteinander verbundenen Profile, wobei die gemeinsame Berührungsfläche eine Krümmung mit konstantem Krümmungsradius aufweist. Die Verbindung erfolgt über die Berührungsflächen durchsetzenden Nieten. Durch Drehung eines der Profile lässt sich die Profilverbindung richten. Die beschriebene Lösung weist jedoch den Nachteil auf, dass nach dem Richten der Profile zuerst Bohrungen ausgeführt werden müssen, um nachfolgend die Nieten zu setzen. Des weiteren lassen sich die Profile ohne aufwendiges Ersetzen der Nietverbindungen nicht beliebig nachrichten.

Die DE 37 40 401 A1 beschreibt eine Schraubverbindung für Karosserieteile eines Kraftfahrzeugs mit einer ersten Anlagefläche eines ersten Karosserieteils, die als Teilfläche eines Rotationskörpers ausgebildet ist. Eine zweite Anlagefläche eines zweiten Karosserieteils ist als negative Form der ersten Anlagefläche ausgebildet, wobei beide Anlageflächen aneinander liegen und durch eine Schraubverbindung gegeneinander fixiert werden.

Aufgabe vorliegender Erfindung ist eine kostengünstige, linienförmige Kaltverbindung, welche grössere Toleranzen der einzelnen Bauteile zulässt, ohne dass umfangreichere Nachbearbeitungsschritte ausgeführt werden müssen.

Erfindungsgemäss wird die Aufgabe durch die kennzeichnenden Merkmale des Anpruchs 1 gelöst.

Das erste bzw. zweite Bauteil mit der dazugehörigen Füge- und gegebenenfalls Auflagefläche ist in einem Stück gefertigt, d.h. ohne nachträgliches Fügen von Einzelteilen.

Die Bauteile sind zweckmässig Längsprofile, vorteilhaft Ein- oder Mehrkammerhohlprofile. Sie weisen bevorzugt parallel verlaufende Profillängsachsen auf. Die Fügeflächen mit der dazugehörigen Kreiszylinderachse verlaufen vorteilhaft parallel zu den Profillängsachsen.

Die Bauteile können vorzugsweise Strangpressprofile sein. Die Bauteile als Strangpressprofile lassen sich auf einfache und kostengünstige Weise in der für vorliegende Ausfühzungsform vorteilhaften Querschnittsform verwirklichen. Insbesondere geeignet sind Strang pressprofile aus Aluminium und seinen Legierungen. Es können beispielsweise das erste oder zweite oder das erste und zweite Bauteil ein Strangpressprofil sein.

Die Bauteile können auch aus einem Eisenmetall, wie Eisen, verzinntes oder verzinktes Eisen, Stahl oder Stahllegierungen, aus einem Nicht-Eisenmetall, wie Buntmetalle, z.B. Messing oder Kupfer, oder aus Magnesium und seinen Legierungen sowie aus dem genannten Aluminium und seinen Legierungen sein. Die Bauteile können des weiteren auch aus verstärkten, insbesondere faserverstärkten Kunststoffen oder aus einer Kombination mit vorgenannten Metallen, d.h. aus einem Metall-Kunststoffverbund, sein.

Das erste und zweite Bauteil sind zweckmässig mittels einer oder mehreren durch Ausnehmungen in der ersten und zweiten Fügefläche führende Schraubverbindungen gegenseitig verbunden. Die Durchmesser der Ausnehmungen quer zur Kreiszylinderachse der ersten Fügefläche und vorteilhaft der ersten und zweiten Fügefläche sind zweckmässig grösser als die Durchmesser der Schrauben an ihren die Ausnehmungen durchstossenden Abschnitten.

Zwischen der Auflagefläche und den Schraubenköpfen der Schraubverbindungen sind zweckmässig ein oder mehrere Unterlageelemente angeordnet. Das Unterlageelement ist auf der der Auflagefläche zugewandten Seite kreiszylinderförmig ausgebildet und der Auflagefläche passgenau angeglichen. Das Unterlageelement weist eine oder mehrere Bohrungen zur Aufnahme der Schrauben auf. Das Unterlageelement kann als Einzelteil mit einer Bohrung für eine einzelne Schraubverbindung oder als streifenförmiges, parallel zur Kreiszylinderachse verlaufendes Profil, als sogenanntes Unterlageprofil, mit mehreren Bohrungen für eine Mehrzahl von Schraubverbindungen ausgebildet sein. Das Unterlageprofil kann ein Strangpressprofil aus Aluminium oder seinen Legierungen mit dieses durchsetzenden Bohrungen sein.

Die Ausnehmungen in der ersten Fügefläche können z.B. Durchführungen, Bohrungen, Längs- oder Schlitzöffnungen sein, wobei die Längs- bzw. Schlitzöffnungen zweckmässig parallel zur Kreiszylinderachse, in Längsrichtung der ersten Fügefläche verlaufen. Die Längs- bzw. Schlitzöffnungen können sich über die gesamte Längenausdehnung der Füge-flächen oder über Abschnitte davon erstrecken.

In einer bevorzugten Ausführung der Erfindung weist eine der Fügeflächen, zweckmässig die zweite Fügefläche, eine Ausnehmung in der Ausgestaltung einer Längsnutöffnung auf. Die Längsnutöffnung ist zweckmässig Teil einer hinter der Fügefläche angeordneten und parallel zur Kreiszylinderachse verlaufende hinterschnittenen Längsnut. Die hinterschnittene Längsnut dient der Aufnahme von Einlageteilen mit Innengewinde wie Dreh- bzw. Klemmplättchen, Nutensteine oder Einlageprofile, wobei das Einlageprofil ein streifenförmig ausgebildetes parallel zur Kreiszylinderachse verlaufendes Profil, insbesondere Strangpressprofil aus Aluminium oder seinen Legierungen, mit einer Mehrzahl von Gewindebohrungen zum Eindrehen von Schrauben ist. Durch Verschieben des ersten Bauteils mit gelockerter Schraubverbindung entlang der Längsnutöffnung können Toleranzen in Richtung der Zylinderachse ausgeglichen werden.

Die Schrauben der Schraubverbindung durchstossen zweckmässig die Ausnehmungen der ersten und die Längsnutöffnung der zweiten Fügefläche und sind in die Innengewinde des oder der Einlageteile gedreht.

Die Klemmplättchen sind zweckmässig parallelogrammartige, plättchenförmige Elemente mit einer Gewindebohrung. Beim Eindrehen der Schraube in das Innengewinde der Klemmplättchen werden die Klemmplättchen mit ihren kürzeren Parallelseiten unter Verankerung an die Längsseiten der hinterschnittenen Längsnut geschwenkt. Die Verankerung kann durch eine konkave Ausbildung der gegen das Profil gezogenen Seite der Klemmplättchen, was eine Verzahnung bewirkt, verbessert werden.

Die der Längsnut entgegen liegende Fügefläche, d.h. die erste Fügefläche, weist zweckmässig parallel zur Kreiszylinderachse verlaufende und in die Längsnutöffnung eingreifende, zweckmässig beidseitig der Ausnehmungen in der ersten Fügefläche angeordnete, Anformungen mit von den Ausnehmungen abweisenden, äusseren Anformungsansätzen auf. Die Distanz zwischen den äusseren Anformungsansätzen ist zweckmässig kleiner als die Breite der Längsnutöffnung, derart dass das erste Bauteil bei gelockerter Schraubverbindung durch Gegeneinandergleiten der ersten und zweiten Fügefläche in einer quer zur Kreiszylinderachse geführten Relativbewegung bis zum Anschlag der äusseren Anformungsansätze an die gegenüber liegende Wand der Längsnutöffnung verschoben werden kann.

Die Anformungen können durchgehende, d.h. sich über die Längsausdehnung der Fügefläche erstreckende oder unterbrochene Anformungen sein. Die Anformungen können beispielsweise bolzen-, zylinder- oder rechteckförmig oder wulstartig ausgebildet sein. Sie dienen zur Begrenzung einer maximal zulässigen Relativverschiebung des Bauteils quer zur Kreiszylinderachse und zur Führung des ersten Bauteils in der Längsnutöffnung des zweiten Bauteils.

In bevorzugter Ausführung der Erfindung sind die Anformungen beidseitig der Ausnehmungen auf der ersten Fügefläche des ersten Bauteils angeordnete, in Längsausdehnung der Fügefläche und parallel zur Kreiszylinderachse verlaufende und in die Längsnutöffnung der zweiten Fügefläche eingreifende erste und zweite Wülste mit äusseren Wulstansätzen. Zwischen den äusseren Wulstansätzen und den gegenüber liegenden Wand der Längsnutöffnung der zweiten Fügefläche ist ein Abstand in Form eines freien Bogenstückes angeordnet, so dass die erste Fügefläche bei gelockerter Schraubverbindung im Uhrzeiger- oder Gegenuhrzeigersinn auf der zweiten Fügefläche gleitend in einer Drehbewegung um die Kreiszylinderachse um das Mass des freien Bogenstückes verschoben werden kann.

Durch die vorgenannte Relativverschiebung der beiden Bauteile können Anschlussschnittstellen an den Bauteilen an die anzubindenden Konstruktionselemente angepasst werden. Nach Anpassung der Bauteile kann durch Fixieren der Befestigungsmittel, d.h. durch Festziehen der Schrauben, eine unverrückbare Verbindung hergestellt werden.

In einer Ausführungsvariante können Anstelle einer Längsnutöffnung und hinterschnittenen Nut im zweiten Bauteil auch Gewindebohrungen zur Aufname der Schrauben vorgesehen sein. Weiters können die obgenannten Anformungen, ebenfalls in vorbestimmtem Abstand zur einer jeweils zugeordneten Anschlagfläche, weiter ab von der Schraubverbindung am äusseren Rand der Kontaktflächen der Fügeflächen angeordnet sein.

Die erste und zweite Fügefläche in Querschnittsansicht schliessen zweckmässig einen Teilkreis mit einem Zentriwinkel von 30 bis 180° (Winkelgrade), vorteilhaft von 40 bis 90°, und insbesondere von 45 bis 55° bezogen auf 360° des gesamten Kreisquerschnittes ein.

Der Radius und die Position der Kreiszylinderachse des die Fügeflächen beschreibenden Kreiszylinders hängen im wesentlichen von der angestrebten Relativverschiebung zwischen dem ersten und zweiten Bauteil an den relevanten Verschiebungspunkten ab.

Die relevanten Verschiebungspunkte an den Bauteilen sind insbesondere die Anschlussschnittstellen, an welchen ein versatzfreies Fügen der Bauteile erforderlich ist.

Der obgenannte Kreiszylinder bzw. Kreiszylinderfläche ist in seinem Querschnitt z.B. derart dimensioniert, dass die angestrebte Verschiebungsrichtung eines relevanten Verschiebungspunktes des Bauteil im wesentlichen im rechten Winkel zur Verbindungsgerade zwischen dem Kreismittelpunkt des Kreiszylinderquerschnittes und dem relevanten Verschiebungspunkt steht.

Des weiteren ist der direkte Abstand vom relevanten Verschiebungspunkt des Bauteils und dem Kreismittelpunkt des Kreiszylinderquerschnittes massgebend für das Verschiebungsmass am relevanten Verschiebungspunkt bei einer Relativverschiebung um einen bestimmten Kreiswinkel.

Die gezielte Bemessung und Positionierung der Kreiszylinderfläche in den Bauteilen erlaubt somit die Bestimmung der Verbschiebungsrichtung und des Verschiebungsmasses an den relevanten Verschiebungspunkten der beiden Bauteile. Verschiedene relevante Verschiebungspunkte an den Bauteilen können zudem bei einer Relativverschiebung der Bauteile unterschiedliche Verschiebungsrichtungen aufweisen.

Die Anschlussschnittstellen an den Bauteilen können Klebeflächen, Fügeflächen, Stege, Flansche, Anformungen, Auflageflächen, Nuten, hinterschnittene Nuten, Bohrungen, hinterschnittene Kupplungsenden und dergl. sein. Die Verbindung zwischen den Bauteilen und weiteren Konstruktionselementen an den Anschlussschnittstellen kann mittels Kaltverbindung wie Nieten, Schrauben, Kleben, Klemmen und dergl. oder einer Kombination von diesen erfolgen.

In weiterer Ausführung der Erfindung sind die Durchmesser der Ausnehmungen der ersten Fügefläche parallel zur Kreiszylinderachse grösser als die Durchmesser der Schrauben an ihren die Ausnehmungen durchstossenden Abschnitten. In vorteilhafter Ausführung sind die Ausnehmungen in der ersten Fügefläche als parallel zur Kreiszylinderachse in Längsrichtung der ersten Fügefläche abschnittsweise verlaufende Schlitzöffnungen. Es kann auch an Stelle einer Mehrzahl von Ausnehmungen bzw. Schlitzöffnungen eine einzige durchgehende Schlitzöffnung in der ersten Fügefläche vorgesehen sein. Dank der Schlitzöffnungen können das erste und zweite Bauteil relativ zueinander parallel zur Kreiszylinderachse linear verschoben und angepasst werden. Des weiteren ermöglicht die vorgenannte Ausführung eine beliebige Positionierung der Schraubverbindungen in Längsrichtung der Bauteile.

Die beiden erfindungsgemäss verbundenen Bauteile können beispielsweise einen Winkel einschliessen, vorzugsweise einen rechten Winkel. Anschlussschnittstellen am ersten und zweiten Bauteil können in einem Winkel, insbesondere rechten Winkel, zueinander stehende Konstruktionselemente wie Wand- und Bodenelemente aufnehmen. Durch gezielte Anordnung und Bemessung der Kreiszylinderflächen bzw. Fügeflächen ergibt sich eine erfindungsgemässe Verbindung der Bauteile mit Verschiebungsrichtungen an den Anschlussschnittstellen, welche in einem Winkel, insbesondere in einem rechten Winkel, zueinander stehen.

In bevorzugten Ausführung der Erfindung ist das erste Bauteil ein unteres Längswandprofil und insbesondere ein Bodengurt und das zweite Bauteil ein Bodenanschlussprofil. Der Bodengurt weist Anschlussschnittstellen zum Fixieren von Wandelementen und das Bodenanschlussprofil weist Anschlussschnittstelle zur Fixierung von Bodenelementen auf.

In weiterer Ausführung der Erfindung ist das erste Bauteil ein oberes Längswandprofil und insbesondere ein Dachgurt und das zweite Bauteil ein Dachanschlussprofil. Der Dachgurt weist Anschlusssschnittstellen zum Fixieren von Wandelementen und das Dachanschlussprofil weist Anschlussschnittstelle zur Fixierung von Deckenelementen auf.

Der Boden- bzw. Dachgurt ist vorteilhaft aus einem stranggepressten Ein- oder Mehrkammerhohlprofil, vorteilhaft aus Aluminium oder seinen Legierungen. Das Dach- bzw. Bodenanschlussprofil ist vorteilhaft aus einem strangepressten Ein- oder Mehrkammerhohlprofil, vorteilhaft aus Aluminium oder seinen Legierungen.

Das erste Bauteil bzw. der Boden- oder Dachgurt weist vorteilhaft eine konvexe Fügefläche auf. Das zweite Bauteil bzw. das Boden- oder Dachanschlussprofil weist vorteilhaft eine konkave Fügefläche auf.

Der Dach- bzw. Bodengurt als erstes Bauteil weist vorteilhaft am entfernten Ende eine hinterschnittene Nut zur Befestigung von Wandelementen, insbesondere Wandsäulen, auf. Das Boden- bzw. Dachanschlussteil als zweites Bauteil weist zweckmässig eine Boden- bzw. Dachanschlussschnittstelle, vorzugsweise in Form eines Steges, zur Befestigung einer Bodenplatte oder von Deckenelementen auf. Der Bodengurt kann des weiteren Anschlussschnittstellen, insbesondere hinterschnittene Nuten, zur Befestigung von Cantilever-Sitzen aufweisen.

Der Boden- resp. Dachgurt und das Boden- resp. Dachanschlussprofil können in jeweiliger Verbindung eine Gesamtlänge von 35 bis 45 cm und eine Gesamtbreite von 20 bis 25 cm aufweisen. Der Radius des Kreiszylinders kann beispielsweise 2 bis 10 cm und insbesondere 3 bis 7 cm betragen.

Die erfindungsgemässe Kaltverbindung wird vorzugsweise in Strassen- oder Schienenfahrzeug eingesetzt. Sie kann auch Anwendung im Flugzeugbau, Boots- bzw. Schiffsbau oder im Bauwesen finden.

Durch die Ausgestaltung der Fügeflächen als Ausschnitt eines Kreiszylinders und dem gegebenen Verschiebungsspielraum der gelockerten Schraubverbindung können durch eine Schwenkbewegung der Bauteile gegeneinander gezielte Relativverschiebungen mit unterschiedlicher Verschiebungsrichtung und -mass an den relevanten Verschiebungspunkten eines Bauteils vorgenommen werden. Dadurch kann z.B. mit einer erfindungsgemässen Verbindung zwischen Bodenanschlussprofil und Bodengurt durch Relativverschiebung der Bauteile die Seitenwand um ein bestimmtes Mass verbreitert werden, ohne dass die Anschlussschnittstellen einer Anpassung bzw. Nachbearbeitung unterzogen werden müssen.

Des weiteren erlaubt die erfindungsgemässe Kaltverbindung in entsprechender Ausführung der Bauteile auch lineare Verschiebungen parallel zur Kreiszylinderachse, wodurch an den relevanten Verschiebungspunkten Toleranzen in zwei Richtungen ausgeglichen werden können.

Im folgenden wird die Erfindung beispielhaft und mit Bezug auf die beiliegenden Zeichnungen näher erläutert. Es zeigen:
- Fig. 1:: einen Querschnitt durch einen Bodengurt in Verbindung mit einem Bodenanschlussprofil gemäss Stand der Technik;
- Fig. 2:: einen Querschnitt durch einen Bodengurt in Verbindung mit einem Bodenanschlussprofil gemäss Erfindung;
- Fig. 3:: einen vergrösserten Ausschnitt der erfindungsgemässen Verbindung zwischen einem Bodengurt und Bodenanschlussprofil gemäss Fig. 2.

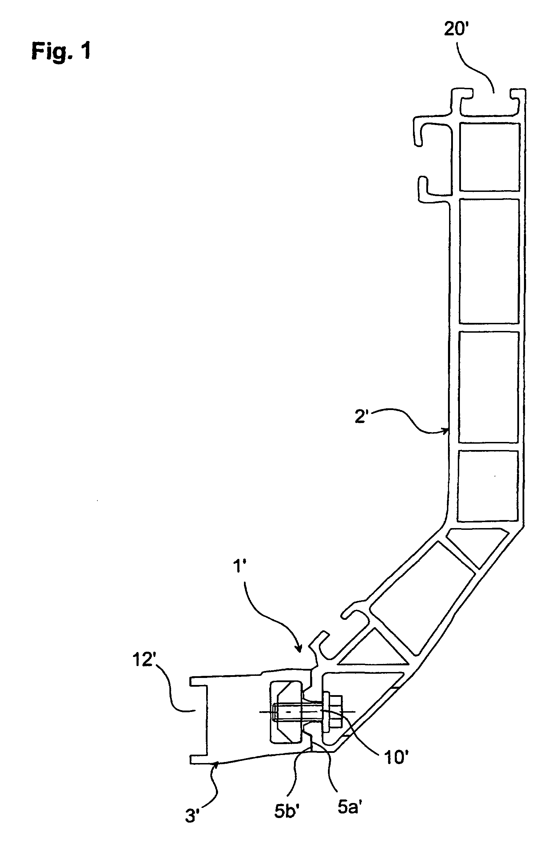

Fig. 1 zeigt eine bekannte Ausführung einer linienförmigen Verbindung 1' zwischen einem Bodengurt 2' als erstes Bauteil mit einer ersten Fügefläche 5a' und einem Bodenanschlussprofil 3' als zweites Bauteil mit einer zweiten Fügefläche 5b'. Der Bodengurt 2' ist mit dem Bodenanschlussprofil 3' über die erste und zweite Fügeflächen durchsetzende Schraubverbindungen 10' verbunden. Die beschriebene linienförmige Verbindung erlaubt nur sehr geringe Toleranzen der Bauteile 2', 3'. Bei grösseren seitlichen Abweichungen an den Boden12' oder Wandanschlussschnittstellen 20' müssen die Bauteile 2', 3' an den Anschlussschnittstellen 12', 20' nachbearbeitet werden.

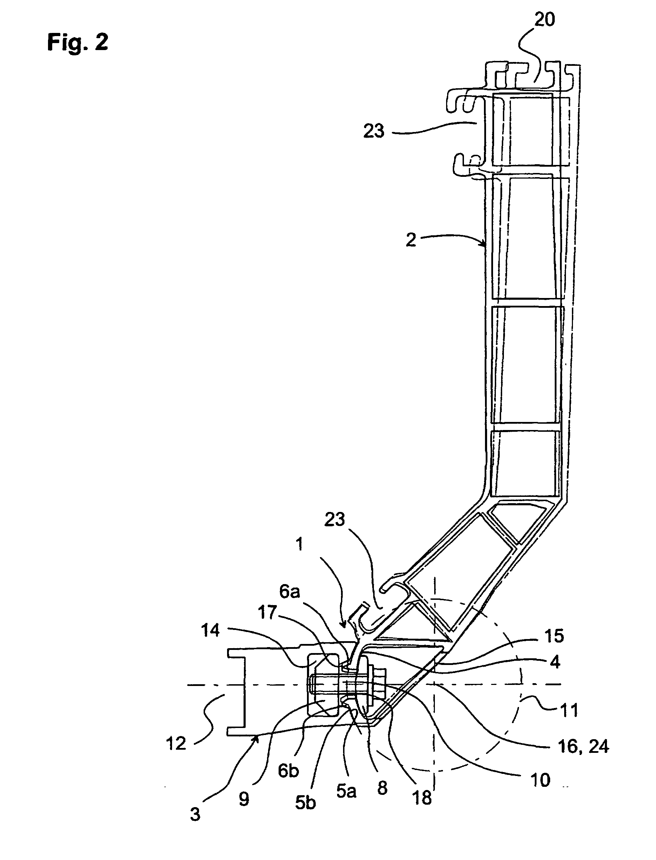

Fig. 2 zeigt eine erfindungsgemässe linienförmige Verbindung 1 zwischen einem Bodengurt 2 als erstes Bauteil und einem Bodenanschlussprofil 3 als zweites Bauteil. Der Bodengurt 2 in Verbindung mit dem Bodenanschlussprofil 3 weist eine Gesamtlänge von rund 40 cm und eine Gesamtbreite von rund 22 cm auf.

Der Bodengurt 2 enthält eine erste Fügefläche 5a und Auflagefläche 4 und das Bodenanschlussprofil 3 enthält eine zweite Fügefläche 5b. Die Fügeflächen 5a, 5b sind einander paarig zugeordnet und zusammen mit der Auflagefläche 4 als Abschnitte eines gemeinsamen Kreiszylinders 11 mit gemeinsamer Kreiszylinderachse 16 ausgebildet. Der Radius des Kreiszylinders 11 beträgt rund 55 mm.

Die zweite Fügefläche 5b enthält eine Längsnutöffnung 17 mit einer hinterschnittenen Längsnut 14, welche beide parallel zur Kreiszylinderachse 16 verlaufen. Der Bodengurt 2 weist eine die Fügefläche 5a durchdringende und parallel zur Kreiszylinderachse 16 verlaufende Schlitzöffnung 18 auf. Von seitens der Auflagefläche 4 im Bodengurt 2 sind Schrauben 10 eingeführt, welche durch die Schlitzöffnung 18 und Längsnutöffnung 17 hindurch in die hinterschnittene Längsnut 14 greifen, wobei die Schrauben 10 jeweils in das Innengewinde von in die Längsnut 14 eingelegten, parallelogrammartigen Klemmplättchen 9 gedreht sind. Die Schraube 10 klemmt das Klemmplättchen 9 gegen die die Hinterschneidung ausbildende Seite der Längsnut 14 fest, so dass das Klemmplättchen 9 mit seinen kurzen Parallelseiten an der Längsseite der Längsnut 14 festliegt. Das Klemmplättchen 9 ist zur besseren Verankerung an seiner zur Längsnutöffnung 17 weisenden Seite konkav ausgebildet.

Die Schrauben 10 liegen mit ihren Schraubenköpfen 25 auf einem Unterlageprofil 8 auf, welches parallel zur Kreiszylinderachse 16 verläuft und an die Rundung der Auflagefläche 4 angepasst ist. Eine Montageöffnung 15 in einer Hohlkammerwand des Bodengurtes 2 erlaubt die Einführung der Schrauben 10 von aussen. Die Schraubverbindung wird mittels durch die Montageöffnung 15 geführtes Werkzeug fest gezogen bzw. gelöst.

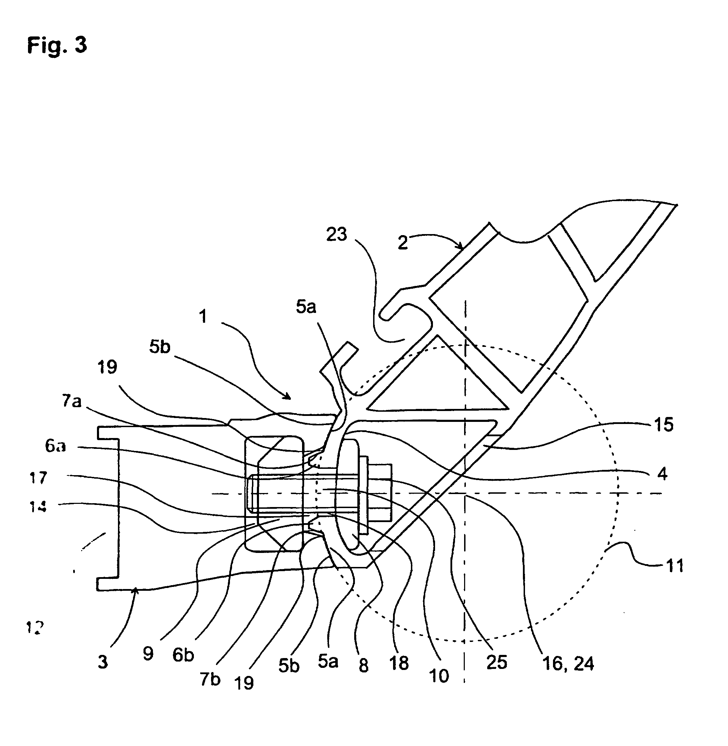

Die erste Fügefläche 5a des Bodengurtes 2 weist beidseits der Ausnehmungen 18 zur Kreiszylinderachse parallel verlaufende Wülste 6a, 6b auf. Die Wülste 6a, 6b gehen an ihren äusseren Wulstansätzen 7a, 7b in die Rundung der Fügefläche 5a über (siehe Fig. 3).

Zwischen den äusseren Wulstansätzen 7a, 7b und den gegenüber liegenden Wänden der Längsnutöffnung 17 liegt jeweils ein Abstand in Form eines freien Bogenstückes 19. Die Länge des freien Bogenstückes 19 ist rund 1 mm.

Der Durchmesser der Ausnehmungen 18 quer zur Kreiszylinderachse 16 ist wenigstens um die doppelte Länge eines freien Bogenstückes 19 grösser als der Durchmesser des durch die Ausnehmungen 18 führenden Abschnittes der Schrauben 10.

Bei gelockerter Schraubverbindung kann somit der Bodengurt 2 relativ zum Bodenanschlussprofil 3 durch Gegeneinandergleiten der ersten und zweiten Fügeflächen 5a, 5b aus einer mittleren Position um die Länge des freien Bogenstücken 19 in einer Drehbewegung gegen den oder im Uhrzeigersinn bis zum Anschlag des äusseren Wulstansatzes 7a an die gegenüber liegende Wand der Längsnutöffnung 17 verschoben werden. Die mögliche Gesamtverschiebung an der Verbindung 1 beträgt somit zweimal die Länge des Bogenstückes 19, d.h. ± 1 mm.

Der Bodengurt 2 weist am entfernteren Ende eine Wandanschlussschnittstelle 20 in Ausgestaltung einer hinterschnittenen Nut auf. Die genannte Relativverschiebung des Bodengurtes 2 an der Verbindung 1 bewirkt eine Verschiebung der Wandanschlussschnittstelle 20 um eine Bogenlänge von rund ± 8 mm. Die Verschiebung ist im wesentlichen horizontal, was einer Verbreiterung bzw. Verschmälerung des Fahrzeugquerschnittes um etwa die genannte Grössenordnung entspricht.

Da die Distanz zwischen dem Kreismittelpunkt 24 des Kreiszylinderquerschnittes und der Wandanschlussschnittstelle 20 als relevanter Verschiebungspunkt wesentlich grösser ist, als die Distanz zwischen dem Kreismittelpunkt 24 des Kreiszylinderquerschnittes und der Verbindung 1, fällt ersteres Verschiebungsmass mit ± 8 mm wesentlich grösser aus.

Die beiden Positionen der maximalen Verschiebung der ersten Bauteile sind in Fig. 2 dargestellt, wobei das erste Bauteil 2 in einer der Positionen in gestrichelter Darstellung gezeigt ist.

Das Bodenanschlussprofil 3 weist einen Bodenanschlussschnittstelle 12 in Form zweier Horizontalstege zur Aufnahme des Bodenelementes auf. Der Bodengurt 2 weist weitere Anschlussschnittstellen 23 in der Ausführung von hinterschnittenen Nuten zur Befestigung von z.B. Sitzstrukturen auf.

## Patentansprüche

1. Linienförmige Kaltverbindung zwischen einem ersten und zweiten Bauteil (2, 3), wobei das erste und zweite Bauteil (2, 3) einander über paarig zugeordnete, parallel verlaufende erste und zweite Fügeflächen (5a, 5b) anliegen und das erste und zweite Bauteil (2, 3) über die erste und zweite Fügefläche (5a, 5b) durchdringende Schraubverbindungen mit Schraubenköpfen (25) gegeneinander fixiert sind, und die Fügeflächen (5a, 5b) und eine den Schraubenköpfen (25) zugewandte Auflagefläche (4) als Abschnitte eines Kreiszylinders (11) mit gemeinsamer Kreiszylinderachse (16) ausgebildet sind und die Fügeflächen (5a, 5b) und die Auflagefläche (4) integraler Bestandteil der Bauteile (2, 3) sind und die beiden Bauteile (2, 3) bei gelockerter Schraubverbindungen in einer Relativbewegung quer zur Kreiszylinderachse schwenkbar sind,
**dadurch gekennzeichnet, dass**
die Fügefläche (5b) des zweiten Bauteils (3) eine parallel zur Zylinderachse verlaufende Längsnutöffnung (17) mit einer daran anschliessenden hinterschnittenen Längsnut (14) aufweist und die Längsnutöffnung (17) der ersten (5a) und Ausnehmungen (18) der zweiten Fügefläche (5b) durchsetzende Schrauben (10) in Innengewinde von einem oder mehreren in die Längsnut (14) eingeführten Einlegeteilen (9) festgedreht sind (9) und das oder die Einlegeteile (9) kraftschlüssig in der Längsnut (14) verankert sind und das erste Bauteil (2) bei gelockerter Schraubverbindungen in die durch die Kreiszylinderachse gegebene Richtung relativ zum zweiten Bauteil (3) linear verschiebbar ist.

2. Linienförmige Kaltverbindung nach Anspruch 1, **dadurch gekennzeichnet, dass** die Bauteile (2, 3) Längsprofile mit parallel verlaufenden Profillängsachsen sind und die Fügeflächen (2, 3) mit der dazugehörigen Kreiszylinderachse (16) parallel zu den Profillängsachsen verlaufen.

3. Linienförmige Kaltverbindung nach Anspruch 1, **dadurch gekennzeichnet, dass** wenigstens ein Bauteil, vorteilhaft beide Bauteile (2, 3), Strangpressprofile, insbesondere stranggepresste Ein- oder Mehrkammerhohlprofile sind.

4. Linienförmige Kaltverbindung nach Anspruch 1, **dadurch gekennzeichnet, dass** wenigstens ein Bauteil, vorteilhaft beide Bauteile (2, 3) aus einem Metall, insbesondere aus Aluminium und seinen Legierungen sind.

5. linienförmige Kaltverbindung nach Anspruch 1, **dadurch gekennzeichnet, dass** das erste Bauteil (2) ein Wandlängsprofil, vorzugsweise ein Boden- oder Dachgurt, ist und das zweite Bauteil (3) ein Boden- oder Dachanschlussprofil eines Strassen- oder Schienenfahrzeuges ist und die beiden gefügten Bauteile (2, 3) Wand- mit Bodenelementen oder Wand- mit Dachelementen verbinden, wobei an den Boden- oder Dachgurt (2) Wandelemente und an das Boden- oder Dachanschlussprofil (3) Dach- oder Bodenelemente festgelegt sind.

6. Linienförmige Kaltverbindung nach Anspruch 1, **dadurch gekennzeichnet, dass** das erste und zweite Bauteil (2, 3) mittels eine oder mehrere durch Ausnehmungen (17, 18) in der ersten und zweiten Fügefläche (5a, 5b) führenden Schraubverbindungen verbunden sind und die Durchmesser der Ausnehmungen quer zur Kreiszylinderachse (16) wenigstens der ersten Fügefläche (5a) und vorzugsweise der ersten und zweiten Fügeflächen (5a, 5b) grösser als die Durchmesser der Schrauben (10) an ihren die Ausnehmungen (17, 18) durchstossenden Abschnitten sind.

7. Linienförmige Kaltverbindung nach Anspruch 1, **dadurch gekennzeichnet, dass** die der Längsnutöffnung (17) anliegende erste Fügefläche (5a) parallel zur Kreiszylinderachse (16) verlaufende und in die Längsnutöffnung (17) eingreifende Anformungen (6a, 6b) aufweist und die Distanz zwischen den äusseren Anformungsansätzen (7a, 7b) kleiner ist als die Breite der Längsnutöffnung (17), derart dass das erste Bauteil (2) bei gelokkerter Schraubverbindung durch Gegeneinandergleiten der ersten und zweiten Fügeflächen (5a, 5b) in einer quer zur Kreiszylinderachse (16) geführten Relativbewegung bis zum Anschlag der äusseren Anformungsansätze (7a, 7b) an die gegenüber liegende Wand der Längsnutöffnung (17) verschoben werden kann.

8. Linienförmige Kaltverbindung nach Anspruch 7, **dadurch gekennzeichnet, dass** die Anformungen beidseitig der Ausnehmungen (18) angeordnete und parallel zur Kreiszylinderachse (16) verlaufende und in die Längsnuten (14) eingreifende erste und zweite Wülste (6a, 6b) mit Wulstansätzen (7a, 7b) sind und die Distanz zwischen den äusseren Wulstansätzen (7a, 7b) der ersten und zweiten Wülste (6a, 6b) kleiner ist als die Breite der Längsnutöffnung (17).

9. Linienförmige Kaltverbindung nach Anspruch 1, **dadurch gekennzeichnet, dass** die Ausnehmung (18) in der ersten Fügefläche (5a) des ersten Bauteils (2) eine parallel zur Kreiszylinderachse in Längsrichtung der Fügefläche (5a) verlaufende Schlitzöffnung (18) ist.

10. Linienförmige Kaltverbindung nach Anspruch 1, **dadurch gekennzeichnet, dass** die Schraubenköpfe (25) einem Unterlageelement (8) aufliegen und das Unterlageelement (8) der Auflagefläche (4) anliegt und an der der Auflagefläche (4) zugewandten Seite eine der Auflagefläche (4) passgenau angeglichene, kreiszylinderförmige Oberflächenform aufweist und die Schrauben (10) durch Bohrungen im Unterlageelement (8) führen.

11. Linienförmige Kaltverbindung nach Anspruch 10, **dadurch gekennzeichnet, dass** das Unterlageelement (8) ein streifenförmiges, parallel zur Kreiszylinderachse (16) verlaufendes Unterlageprofil (8) ist und eine Mehrzahl von Bohrungen zur Aufnahme der Schraubverbindungen das Unterlageprofil (8) durchsetzen.

12. Verwendung der linienförmigen Kaltverbindung nach Anspruch 1 in Strassen- oder Schienenfahrzeugen.

## Claims

1. Linear cold connection between first and second components (2, 3), in which the first and second components (2, 3) bear against one another by means of an associated pair of parallel first and second joint surfaces (5a, 5b), the first and second components (2, 3) are fixed relative to one another by means of screw connections with screw heads (25) penetrating the first and second joint surfaces (5a, 5b), the joint surfaces (5a, 5b) and a bearing surface (4) directed towards the screw heads (25) are designed as segments of a circular cylinder (11) with a common axis (16), the joint surfaces (5a, 5b) and the bearing surface (4) are an integral part of the components (2, 3) and the two components (2, 3) can pivot in a relative movement transversely to the circular cylinder axis when the screw connections are loosened, **characterised in that** the joint surface (5b) of the second component (3) has a longitudinal groove-type opening (17) extending parallel to the cylinder axis with an adjoining undercut longitudinal groove (14), screws (10) passing through the longitudinal groove-type opening (17) in the first joint surface (5a) and recesses (18) in the second joint surface (5b) are screwed tightly into internal threads of one or more inserts (9) introduced into the longitudinal groove (14), the insert or inserts (9) are anchored non-positively in the longitudinal groove (14) and the first component (2) can be displaced linearly relative to the second component (3) in the direction defined by the circular cylinder axis when the screw connections are loosened.

2. Linear cold connection according to claim 1, **characterised in that** the components (2, 3) are longitudinal sections with parallel longitudinal axes and the joint surfaces (2, 3) with the associated circular cylinder axis (16) extend parallel to the longitudinal axes of the sections.

3. Linear cold connection according to claim 1, **characterised in that** at least one component, advantageously both components (2, 3) are extruded sections, in particular extruded single-compartment or multi-compartment hollow sections.

4. Linear cold connection according to claim 1, **characterised in that** at least one component, advantageously both components (2, 3) are made of a metal, in particular aluminium and its alloys.

5. Linear cold connection according to claim 1, **characterised in that** the first component (2) is a longitudinal wall section, preferably a floor flange or roof flange, the second component (3) is a floor or roof connecting section of a road or rail vehicle and the two components (2, 3) joined together connect wall elements to floor elements or wall elements to roof elements, wall elements being fixed to the floor flange or roof flange (2) and roof or floor elements being fixed to the floor or roof connecting section (3).

6. Linear cold connection according to claim 1, **characterised in that** the first and second components (2, 3) are connected together by means of one or more screw connections passing through recesses (17, 18) in the first and second joint surfaces (5a, 5b) and the diameters of the recesses at least in the first joint surface (5a) and preferably in the first and second joint surfaces (5a, 5b) transverse to the circular cylinder axis (16) are greater than the diameters of the screws (10) at their portions penetrating the recesses (17, 18).

7. Linear cold connection according to claim 1, **characterised in that** the first joint surface (5a) bearing against the longitudinal groove-type opening (17) has projections (6a, 6b) extending parallel to the circular cylinder axis (16) and engaging in the longitudinal groove-type opening (17) and the distance between the outer shoulders (7a, 7b) of the projections is smaller than the width of the longitudinal groove-type opening (17), such that the first component (2) can be displaced in a relative movement transversely to the circular cylinder axis (16) until the outer shoulders (7a, 7b) of the projections come to a stop against the opposing wall of the longitudinal groove-type opening (17) by sliding the first and second joint surfaces (5a, 5b) relative to one another when the screw connection is loosened.

8. Linear cold connection according to claim 7, **characterised in that** the projections are first and second beads (6a, 6b) with shoulders (7a, 7b) arranged on either side of the recesses (18), extending parallel to the circular cylinder axis (16) and engaging in the longitudinal grooves (14) and the distance between the outer shoulders (7a, 7b) of the first and second beads (6a, 6b) is smaller than the width of the longitudinal groove-type opening (17).

9. Linear cold connection according to claim 1, **characterised in that** the recess (18) in the first joint surface (5a) of the first component (2) is a slotted opening (18) extending parallel to the circular cylinder axis in the longitudinal direction of the joint surface (5a).

10. Linear cold connection according to claim 1, **characterised in that** the screw heads (25) rest on a washer element (8), the washer element (8) bears against the bearing surface (4) and is provided on the side directed towards the bearing surface (4) with a surface in the shape of a circular cylinder exactly matching the bearing surface (4) and the screws (10) pass through bores in the washer element (8).

11. Linear cold connection according to claim 10, **characterised in that** the washer element (8) is a strip-shaped washer section (8) extending parallel to the circular cylinder axis (16) and a plurality of bores for receiving the screw connections penetrate the washer section (8).

12. Use of the linear cold connection according to claim 1 in road or rail vehicles.

## Revendications

1. Liaison d'assemblage à froid linéaire entre une première et une seconde pièce de construction (2, 3), la première et la seconde pièce de construction (2, 3) s'appuyant l'une sur l'autre par l'intermédiaire de premières et secondes surfaces de jonction (5a, 5b) associées par paires et s'étendant parallèlement l'une à l'autre, et la première et la seconde pièce de construction (2, 3) étant fixées réciproquement l'une à l'autre par l'intermédiaire de liaisons à vis traversant la première et la seconde surface de jonction (5a, 5b) et comportant des têtes de vis (25), et les surfaces de jonction (5a, 5b) et une surface d'appui (4) dirigée vers le têtes de vis (25) étant réalisées en tant que tronçons d'un cylindre circulaire (11) avec un axe de cylindre circulaire (16) commun, et les surfaces de jonction (5a, 5b) et la surface d'appui (4) faisant partie intégrante des pièces de construction (2, 3), et les deux pièces de construction (2, 3) pouvant pivoter selon un mouvement relatif, transversalement à l'axe de cylindre circulaire, lorsque les liaisons à vis sont desserrées,
**caractérisée en ce que** la surface de jonction (5b) de la seconde pièce de construction (3) présente une ouverture de rainure longitudinale (17) s'étendant parallèlement à l'axe de cylindre et à laquelle se raccorde une rainure longitudinale (14) en contre-dépouille, et des vis (10), qui traversent l'ouverture de rainure longitudinale (17) de la première (5a) et des évidements (18) de la seconde surface de jonction (5b), sont vissées de manière fixe dans des filetages intérieurs ou taraudages d'une ou de plusieurs pièces d'insert (9) ayant été introduites dans la rainure longitudinale (14), et la ou les pièces d'insert (9) sont ancrées par adhérence dans la rainure longitudinale (14), et la première pièce de construction (2), lorsque les liaisons à vis sont desserrées, peut coulisser linéairement en translation par rapport à la seconde pièce de construction (3), dans la direction donnée par l'axe de cylindre circulaire.

2. Liaison d'assemblage à froid linéaire selon la revendication 1, **caractérisée en ce que** les pièces de construction (2, 3) sont des profilés longitudinaux avec des axes longitudinaux de profilé s'étendant parallèlement l'un à l'autre, et les surfaces de jonction (5a, 5b), avec l'axe de cylindre circulaire (16) associé, s'étendent parallèlement aux axes longitudinaux de profilé.

3. Liaison d'assemblage à froid linéaire selon la revendication 1, **caractérisée en ce qu'**au moins une pièce de construction, avantageusement les deux pièces de construction (2, 3) sont des profilés filés, notamment des profilés filés creux à une ou plusieurs chambres.

4. Liaison d'assemblage à froid linéaire selon la revendication 1, **caractérisée en ce qu'**au moins une pièce de construction, avantageusement les deux pièces de construction (2, 3) sont réalisées en un métal, notamment en aluminium et ses alliages.

5. Liaison d'assemblage à froid linéaire selon la revendication 1, **caractérisée en ce que** la première pièce de construction (2) est un profilé longitudinal de paroi, de préférence une ceinture de plancher ou de toit, et la seconde pièce de construction (3) un profilé de raccordement de plancher ou de toit d'un véhicule routier ou d'un véhicule sur rails, et les deux pièces de construction (2, 3) assemblées relient des éléments de paroi avec des éléments de plancher ou des éléments de paroi avec des éléments de toit, des éléments de paroi étant fixés à la ceinture de plancher ou de toit (2) et des éléments de toit ou de plancher étant fixés au profilé de raccordement de plancher ou de toit (3).

6. Liaison d'assemblage à froid linéaire selon la revendication 1, **caractérisée en ce que** la première et la seconde pièce de construction (2, 3) sont assemblées au moyen d'une ou de plusieurs liaisons à vis conduisant à travers des évidements (17, 18) dans la première et la seconde surface de jonction (5a, 5b), et les diamètres des évidements, transversalement à l'axe de cylindre circulaire (16), au moins de la première surface de jonction (5a) et de préférence des deux surfaces de jonction (5a, 5b), sont supérieurs aux diamètres des vis (10) au niveau de leurs tronçons traversant les évidements (17, 18).

7. Liaison d'assemblage à froid linéaire selon la revendication 1, **caractérisée en ce que** la première surface de jonction (5a) s'appuyant sur l'ouverture de rainure longitudinale (17), présente des appendices (6a, 6b) s'étendant parallèlement à l'axe de cylindre circulaire (16) et s'engageant dans l'ouverture de rainure longitudinale (17), et la distance entre les épaulements extérieurs d'appendice (7a, 7b) est inférieure à la largeur de l'ouverture de rainure longitudinale (17) de façon à ce que la première pièce de construction (2), lorsque la liaison à vis est desserrée, puisse, par glissement réciproque des première et seconde surfaces de jonction (5a, 5b), être déplacée, dans un mouvement relatif guidé transversalement à l'axe de cylindre circulaire (16), jusqu'à la butée des épaulements extérieurs d'appendice (7a, 7b) contre la paroi opposée de l'ouverture de rainure longitudinale (17).

8. Liaison d'assemblage à froid linéaire selon la revendication 7, **caractérisée en ce que** les appendices sont des premier et second bourrelets (6a, 6b) qui sont disposés de part et d'autre des évidements (18), s'étendent parallèlement à l'axe de cylindre circulaire (16), s'engagent dans les rainures longitudinales (14) et comportent des épaulements de bourrelet (7a, 7b), et la distance entre les épaulements extérieurs de bourrelet (7a, 7b) des premier et second bourrelets (6a, 6b) est inférieure à la largeur de l'ouverture de rainure longitudinale (17).

9. Liaison d'assemblage à froid linéaire selon la revendication 1, **caractérisée en ce que** l'évidement (18) dans la première surface de jonction (5a) de la première pièce de construction (2) est une ouverture en fente (18) s'étendant parallèlement à l'axe de cylindre circulaire dans la direction longitudinale de la surface de jonction (5a).

10. Liaison d'assemblage à froid linéaire selon la revendication 1, **caractérisée en ce que** les têtes de vis (25) reposent sur un élément de calage d'appui (8), et l'élément de calage d'appui (8) s'applique sur la surface d'appui (4) et présente, sur le côté dirigé vers la surface d'appui (4), une forme de surface cylindrique circulaire adaptée de manière parfaitement ajustée à la surface d'appui (4), et les vis (10) conduisent à travers des perçages dans l'élément de calage d'appui (8) .

11. Liaison d'assemblage à froid linéaire selon la revendication 10, **caractérisée en ce que** l'élément de calage d'appui (8) est un profilé de calage d'appui (8) en forme de baguette s'étendant parallèlement à l'axe de cylindre circulaire (16), et plusieurs perçages traversent le profilé de calage d'appui (8) pour recevoir les liaisons par vis.

12. Utilisation de la liaison d'assemblage à froid linéaire selon la revendication 1 dans des véhicules routiers ou des véhicules sur rails.
